# EUROPEAN PATENT SPECIFICATION

(11) **EP 2 415 801 B1**
(45) Date of publication and mention of the grant of the patent: **06.06.2018**
(21) Application number: 10758509.3
(22) Date of filing: 25.03.2010
(51) Int. Cl.: C08G 69/26, C08K 7/04, C08L 77/06

(54) **POLYAMIDE RESIN, POLYAMIDE RESIN COMPOSITION, AND MOLDED ARTICLE COMPRISING SAME**
POLYAMIDHARZ, POLYAMIDHARZ-ZUSAMMENSETZUNG SOWIE FORMARTIKEL DAMIT
RÉSINE DE POLYAMIDE, COMPOSITION DE RÉSINE DE POLYAMIDE ET ARTICLE MOULÉ LE COMPRENANT

(30) Priority: 30.03.2009 JP 2009080998
(43) Date of publication of application: 08.02.2012
(73) Proprietor: Toray Industries, Inc., Tokyo 103-8666 (JP)
(72) Inventor: KATO, Koya, Nagoya-shi Aichi 455-8502 (JP); MASUNAGA, Atsushi, Nagoya-shi Aichi 455-8502 (JP); MATSUOKA, Hideo, Nagoya-shi Aichi 455-8502 (JP)
(74) Representative: Hoefer & Partner Patentanwälte mbB
(86) International application number: PCT/JP2010/055161
(87) International publication number: WO 2010/113736

(56) References cited:
- WO-A1-2006/123778
- WO-A1-2010/002000
- JP-A- 4 312 556
- JP-A- 62 079 259
- JP-A- 2003 292 612
- JP-A- 2003 292 614
- JP-A- 2004 000 114
- JP-A- 2009 096 796
- US-A1- 2005 003 497
- CUI, XIAOWEN ET AL.: 'Investigation on odd-odd nylons based on undecanedioic acid: 1.' SYNTHESIS AND CHARACTERIZATION, POLYMER INTERNATIONAL vol. 53, no. 11, 2004, pages 1729 - 1734, XP008155419

## Description

### TECHNICAL FIELD

The present invention relates to a polyamide resin excellent in heat resistance, low water absorbability and residence stability.

### BACKGROUND ART

Polyamide resins that have a feature of being excellent in heat resistance, moldability, stiffness, toughness and the like are used as under hood parts of automobiles such as tops and bases of radiator tanks, cylinder head covers, canisters, gears, valves, connectors, through anchors, various tanks, brake pipes and fuel pipe tubes, and also as external wheel cap parts, etc.

However, since polyamide resins are more likely to absorb water than other resins, they are likely to decline in material stiffness and heat resistance and further likely to change dimensionally, and therefore could not be readily applied as resin parts. Meanwhile, a material with higher resistance against calcium chloride and magnesium chloride scattered as road surface anti-freezing agents in winter is demanded.

High grade polyamides typified by nylon 610 and nylon 612 are lower in water absorbability than nylon 6 and nylon 66, and therefore are good in dimensional stability, chemicals resistance, etc., being known to be excellent also in the resistance against such road surface anti-freezing agents as calcium chloride and magnesium chloride. Patent Documents 1 and 2 disclose polyamide resin compositions using these high grade polyamides. However, nylon 610 and nylon 612 have a problem that since they are likely to increase in viscosity during melt residence, they are unstable in molding processability.

On the other hand, Patent Document 3 discloses nylon 510 (melting point: 196°C). However, since pentamethylenediamine used as a raw material of nylon 510 contains much 2,3,4,5-tetrahydropyridine and piperidine as impurities, the melting point of the nylon 510 obtained by thermal polycondensation is lower than the melting point (216°C) of the nylon 510 obtained by interfacial polycondensation disclosed in Non-Patent Document 1. Therefore, nylon 510 obtained by thermal polycondensation has disadvantageously a structural defect.

### PRIOR ART DOCUMENTS

### PATENT DOCUMENTS

Patent Document 1: JP 57-212252 A
Patent Document 2: JP 2007-112915 A
Patent Document 3: JP 2003-292614 A

### NON-PATENT DOCUMENT

Non-Patent Document 1: J. Polym. Sci. Part B: Polym. Phys., vol. 37, 2383-2395 (1999)

### SUMMARY OF THE INVENTION

### PROBLEM TO BE SOLVED BY THE INVENTION

The problem addressed by this invention is to provide a polyamide resin excellent in heat resistance, low water absorbability and residence stability.

### MEANS FOR SOLVING THE PROBLEM

The inventors found that if the amount of the impurities contained in the pentamethylenediamine used as a raw material of a polyamide is kept at smaller than a specific amount, a polyamide resin excellent in heat resistance, melt residence stability and low water absorbability can be obtained. Thus, this invention has been led.

This invention is:
(i) a polyamide resin, whose relative viscosity in 98% sulfuric acid solution with a 0.01 g/ml content at 25°C is 1.8 to 4.5, obtained by the thermal polycondensation of pentamethylenediamine containing 0.10 wt% or less of 2,3,4,5-tetrahydropyridine and piperidine in total and an aliphatic dicarboxylic acid with 7 or more carbon atoms as main ingredients,
(ii) a polyamide resin as described in paragraph (i), wherein if the relative viscosity of the polyamide resin in sulfuric acid solution is X and the relative viscosity of the polyamide resin in sulfuric acid solution after melt residence at the melting point + 30°C for 1 hour is Y, then Y/X is 1.00 to 1.30,
(iii) a polyamide resin, as described in either paragraph (i) or (ii), which has a melting point of 200°C or higher,
(iv) a polyamide resin, as described in any of paragraphs (i) to (iii), wherein the aliphatic dicarboxylic acid with 7 or more carbon atoms is at least one selected from azelaic acid, sebacic acid, undecanedioic acid and dodecanedioic acid,
(v) a polyamide resin composition obtained by mixing 0.1 to 200 parts by weight of a fibrous filler with 100 parts by weight of the polyamide resin as described in any of paragraphs (i) to (iv),
(vi) a polyamide resin composition as described in paragraph (v), wherein the fibrous filler is glass fibers and/or carbon fibers,
(vii) a polyamide resin composition obtained by mixing 1 to 100 parts by weight of an impact strength modifier with 100 parts by weight of the polyamide resin as described in any of paragraphs (i) to (iv),
(viii) a polyamide resin composition obtained by mixing 1 to 50 parts by weight of a flame retarder with 100 parts by weight of the polyamide resin as described in any of paragraphs (i) to (iv),
(ix) a polyamide resin composition obtained by mixing 1 to 40 parts by weight of a polyamide resin other than the main ingredient with 100 parts by weight of the polyamide resin as described in any of paragraphs (i) to (iv),
(x) a molded article obtained by injection-molding the polyamide resin as described in any of paragraphs (i) to (iv) or the polyamide resin composition as described in any of paragraphs (v) to (ix),
(xi) a molded article, as described in paragraph (x), which is long,
(xii) a method for producing the polyamide resin as described in any of paragraphs (i) to (iv) by the thermal polycondensation of raw materials including pentamethylenediamine containing 0.10 wt% or less of 2,3,4,5-tetrahydropyridine and piperidine in total and an aliphatic dicarboxylic acid with 7 or more carbon atoms as main ingredients.

### EFFECT OF THE INVENTION

This invention can provide a polyamide resin containing pentamethylenediamine as a component, excellent in heat resistance, low water absorbability and melt residence stability.

### MODES FOR CARRYING OUT THE INVENTION

The pentamethylenediamine used in this invention contains 2,3,4,5-tetrahydropyridine, piperidine and other impurities, and it is necessary that the total content of 2,3,4,5-tetrahydropyridine and piperidine is 0.10 wt% or less.

The polyamide resin containing pentamethylenediamine and an aliphatic dicarboxylic acid with 7 or more carbon atoms as main ingredients is a polyamide resin in which the total weight of the pentamethylenediamine and the aliphatic dicarboxylic acid with 7 or more carbon atoms is 70 wt% or more of the monomers used as raw materials. More preferred is 80 wt% or more, and further more preferred is 90 wt% or more. Other ingredients than the main ingredients can be introduced by copolymerizing them with the main ingredients. If an aliphatic dicarboxylic acid with 7 or more carbon atoms is used, a polyamide resin with a low water absorption coefficient can be obtained.

Examples of the aliphatic dicarboxylic acid with 7 or more carbon atoms include pimelic acid, suberic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, 1,2-cyclohexanedicarboxylic acid, 1,3-cyclohexanedicarboxylic acid, etc. Especially azelaic acid, sebacic acid, undecanedioic acid and dodecanedioic acid are preferred, since they are easily available and excellent in the balance between the low water absorbability and heat resistance of the polyamide resin composition.

Examples of the comonomer contained by less than 30 wt% in the polyamide resin include amino acids such as 6-aminocaproic acid, 11-aminoundecanoic acid, 12-aminododecanoic acid and p-aminomethylbenzoic acid, lactams such as ε-caprolactam and ω-laurolactam, aliphatic dicarboxylic acids such as oxalic acid, malonic acid, succinic acid and glutaric acid, alicyclic dicarboxylic acids such as cyclohexanedicarboxylic acid, aromatic dicarboxylic acids such as terephthalic acid, isophthalic acid and naphthalenedicarboxylic acid, aliphatic diamines such as ethylenediamine, 1,3-diaminopropane, 1,4-diaminobutane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane and 2-methyl-1,5-diaminopentane, alicyclic diamines such as cyclohexanediamine and bis(4-aminocyclohexyl)methane, aromatic diamines such as xylylenediamine, etc.

The method for producing the pentamethylenediamine constituting this invention is not limited. For example, an organic synthesis method of synthesizing from lysine using a vinyl ketone such as 2-cyclohexene-1-one as a catalyst (JP 60-23328 A), an enzyme method of converting from lysine using a lysine decarboxylase (JP 2004-114 A and JP 2005-6650 A), a fermentation method using a saccharide as a raw material (JP 2004-222569 A and WO 2007/113127), etc. are already proposed. The organic synthesis method requires a high reaction temperature of about 150°C, but the reaction temperatures of the enzyme method and the fermentation method are lower than 100°C. Since the side reaction is probably decreased in the latter methods, it is preferred to use the pentamethylenediamine obtained by either of the latter methods as a raw material.

The lysine decarboxylase used in the enzyme method is an enzyme for converting lysine into pentamethylenediamine, and it is known that the enzyme exists not only in the microbes of the Genus *Escherichia* such as *Escherichia coli* K12 strain but also in many other organisms.

The lysine decarboxylase preferably used in this invention may be either one existing in any of these organisms or one derived from recombinant cells in which the intracellular activity of the lysine decarboxylase has been enhanced.

As the recombinant cells, any cells derived from a microbe, animal, plant or insect can be preferably used. For example in the case where an animal is used, a mouse, rat, cultured cells thereof or the like can be used. In the case where a plant is used, for example, *Arabidopsis Thaliana,* tobacco or cultured cells thereof can be used. Further, in the case where an insect is used, for example, silkworms, cultured cells thereof or the like can be used. Furthermore, in the case where a microbe is used, for example, *Escherichia coli* or the like can be used.

Moreover, multiple lysine decarboxylases can also be used in combination.

Examples of the microbe having such lysine decarboxylases include *Bacillus halodurans, Bacillus subtilis, Escherichia coli, Selenomonas ruminantium, Vibrio cholerae, Vibrio parahaemolyticus, Streptomyces coelicolor, Streptomyces pilosus, Eikenella corrodens, Eubacterium acidaminophilum, Salmonella typhimurium, Hafnia alvei, Neisseria meningitidis, Thermoplasma acidophilum, Pyrococcus abyssi* and *Corynebacterium glutamicum,* etc.

The method for obtaining a lysine decarboxylase is not especially limited. For example, a microbe having a lysine decarboxylase or recombinant cells having a lysine decarboxylase with enhanced intracellular activity are cultured in an adequate medium and the proliferated funguses are collected for use as resting microorganisms. Otherwise, the microorganisms can be crushed to prepare a cell-free extract, and as required, the extract can also be refined.

The method for culturing microbes or recombinant cells with a lysine decarboxylase in order to extract the lysine decarboxylase is not especially limited. For example, in the case where a microbe is cultured, a medium containing carbon sources, nitrogen sources, inorganic ions and as required other organic ingredients is used. For example, in the case of *E. coli,* an LB medium is often used. Carbon sources include saccharides such as glucose, lactose, galactose, fructose, arabinose, maltose, xylose, trehalose, ribose and starch hydrolysate, alcohols such as glycerol, mannitol and sorbitol, organic acids such as gluconic acid, fumaric acid, citric acid and succinic acid. Nitrogen sources include inorganic ammonium salts such as ammonium sulfate, ammonium chloride and ammonium phosphate, organic nitrogen compounds such as soybean hydrolysate, ammonia gas, ammonia water, etc. As organic trace nutrients, it is desirable to contain adequate amounts of needed substances, for example, various amino acids, vitamins such as vitamin B1 and nucleic acids such as RNA, yeast extracts, etc. In addition, as required, small amounts of calcium phosphate, calcium sulfate, iron ions, manganese ions and the like are added.

The culture conditions are not especially limited, and for example in the case of *E. coli,* it is desirable to culture under aerobic conditions for approx. 16 to approx. 72 hours and to control the culture temperature in a range from 30°C to 45°C, preferably at 37°C and the culture pH in a range from 5 to 8, preferably at pH 7. Meanwhile, for adjusting the pH, an inorganic or organic acidic or alkaline substance, ammonia gas or the like can be used.

The proliferated microbe or recombinant cells can be collected from the culture solution by centrifugation, etc. In order to prepare a cell-free extract from the collected microbe or recombinant cells, an ordinary method can be used. That is, the microbe or recombinant cells are crushed by such a method as ultrasonic treatment, Dyno-mill or French press, and the fungus residue is removed by centrifugation to obtain a cell-free extract.

The lysine decarboxylase can be refined from the cell-free extract by adequately combining the methods usually used for enzymatic refining such as ammonium sulfate fractionation, ion exchange chromatography, hydrophobic chromatography, affinity-chromatography, gel filtration chromatography, isoelectric point precipitation, heat treatment and pH adjustment. The refining is not necessarily required to be perfect refining, and it is only required to remove foreign substances such as the other enzymes participating in the decomposition of lysine than the lysine decarboxylase and the enzymes capable of decomposing produced pentamethylenediamine.

The conversion from lysine to pentamethylenediamine by a lysine decarboxylase can be performed by bringing the lysine decarboxylase obtained as described above into contact with lysine.

The lysine concentration in the reaction solution is not especially limited. The amount of the lysine decarboxylase is only required to be enough to catalyze the reaction for converting lysine to pentamethylenediamine.

The reaction temperature is usually 28 to 55°C, preferably approx. 40°C. The reaction pH is usually 5 to 8, preferably approx. 6. As pentamethylenediamine is produced, the reaction solution changes to an alkaline state, and therefore it is preferred to add an inorganic or organic acid material for maintaining the reaction pH. It is preferred to use hydrochloric acid. The reaction can be performed by either a stationary method or a stirring method. The lysine decarboxylase may also be immobilized. The reaction time varies depending on such conditions as the activity of the enzyme used and substrate concentration, and is usually 1 to 72 hours. Further, the reaction may also be performed continuously while lysine is supplied.

After completion of reaction, the pentamethylenediamine produced as described above can be collected from the reaction solution by an ion exchange resin, a precipitant, a solvent extraction, simple distillation or any other ordinary collecting or separating method.

Pentamethylenediamine tends to contain 2,3,4,5-tetrahydropyridine and piperidine as impurities. The former is an alkaline compound, and the compound per se is not polymerized. However, there is a problem that it acts as a catalyst for decomposing a polyamide resin. Further, there is a problem that the latter becomes an end-capping agent during polymerization, to slow the polymerization rate. For these reasons, it is necessary that the total content of 2,3,4, 5-tetrahydropyridine and piperidine contained in the pentamethylenediamine used in this invention is kept at 0.10 wt% or less. More preferred is 0.05 wt% or less, and the most preferred is 0. The impurities can be decreased by repeating the abovementioned refining methods. It is preferred to repeat the refining operation twice or more, and it is more preferred to repeat the refining operation 3 times or more.

The method for producing the polyamide resin in this invention is a thermal polycondensation method in which a mixture substantially consisting of the salt of pentamethylenediamine and a dicarboxylic acid with 7 or more carbon atoms, and water is heated to perform a dehydration reaction. The thermal polymerization is a method in which the raw materials are heated in the presence of water, to keep the polymerization system at a pressurized state by the generated water vapor, for producing a prepolymer, followed by releasing pressure for returning to atmospheric pressure, raising the temperature in the polymerization system to higher than the melting point of the produced polymer, and further keeping atmospheric pressure or reduced pressure, to perform polycondensation.

In the thermal polycondensation for producing the polyamide resin, the ratio of the supplied amounts of pentamethylenediamine and an aliphatic dicarboxylic acid with 7 or more carbon atoms can be controlled to adjust the amino end group concentration and the carboxyl end group concentration. If the number of moles of the pentamethylenediamine used as a raw material is a, and the number of moles of the dicarboxylic acid with 7 or more carbon atoms used as another raw material is b, then it is preferred that the ratio of the amounts of the raw materials is adjusted in order to keep the ratio a/b in a range from 0.95 to 1.05. It is more preferred that the ratio of the amounts of the raw materials is adjusted in order to keep the ratio a/b in a range from 0.98 to 1.02. If a/b is less than 0.95, the amount of all the amino groups in the polymerization system becomes very small compared with the amount of all the carboxyl groups, and it is difficult to obtain a polymer with a sufficiently high molecular weight. On the other hand, if a/b is larger than 1.05, the amount of all the carboxyl groups in the polymerization system becomes very small compared with the amount of all the amino groups, and it is difficult to obtain a polymer with a sufficiently high molecular weight.

Further, it is also possible to intentionally seal the amino end groups of the polyamide resin. As the monocarboxylic acid used as an amino end-capping agent, any monocarboxylic acid reactive with amino groups can be used without any particular limitation. Examples of the monocarboxylic acid include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid, alicyclic monocarboxylic acids such as cyclohexanecarboxylic acid, aromatic monocarboxylic acids such as benzoic acid, toluic acid, α-naphthalenecarboxylic acid, β-naphthalenecarboxylic acid, methylnaphthalenecarboxylic acid and phenylacetic acid, arbitrary mixtures thereof, etc. Among them, in view of reactivity, stability of capped ends, etc., preferred are acetic acid, propionic acid, butyric acid, valeric acid, caproic acid, caprylic acid, lauric acid, tridecanoic acid, myristic acid, palmitic acid, stearic acid and benzoic acid.

The thermal polycondensation for producing a polyamide resin requires a step of keeping the polymerization system internally in a pressurized state, to produce a prepolymer, as usually required in melt polymerization, and it is necessary to do so in the presence of water. It is preferred that the supplied amount of water is 10 to 70 wt% based on the total amount of the raw materials and water supplied. It is not preferred that the amount of water is less than 10 wt%, since it takes much time for uniformly dissolving the nylon salt, resulting in a tendency to impose an excessive thermal history. On the contrary, it is not preferred either that the amount of water is larger than 70 wt% for such reasons that enormous thermal energy is consumed for removing water and that it takes much time to produce the prepolymer. Further, it is preferred that the pressure held in the pressurized state is 10 to 20 kg/cm². It is not preferred that the pressure is held at lower than 10 kg/cm², since pentamethylenediamine is likely to be volatilized outside the polymerization system. Further, it is not preferred either that the pressure is held at higher than 20 kg/cm², since it tends to take a long time for producing the prepolymer.

In this invention, it is preferred that the highest temperature reached in the polymerization system is in a range from the melting point of the obtained polyamide resin to 300°C or lower. A more preferred range is from the melting point to the melting point + 50°C. It is not preferred that the highest temperature reached is lower than the melting point, since the polymer is precipitated in the polymerization system, to greatly lower the productivity. If the highest temperature reached is higher than 300°C, the volatilization of pentamethylenediamine is promoted, while there is a tendency to deteriorate the obtained polyamide resin.

After thermal polycondensation, molecular weight of the polyamide resin can also be further increased by solid phase polymerization or using a melt extruder. The solid phase polymerization takes place by heating in a temperature range from 100°C to the melting point in vacuum or in an inert gas.

It is necessary that the degree of polymerization of the polyamide resin in this invention is such that the relative viscosity in 98% sulfuric acid solution with a 0.01 g/ml content is 1.8 to 4.5. A preferred range is 2.1 to 3.5, and a further more preferred range is 2.5 to 3.2. It is not preferred that the relative viscosity is less than 1.8, since the strength tends to decline. On the other hand, it is not preferred either that the relative viscosity is more than 4.5, since the flowability declines to impair molding processability.

In this invention, since it is intended to obtain a polyamide resin with excellent residence stability, it is preferred that if the relative viscosity in sulfuric acid solution of the polyamide resin in this invention before melt residence is X, and the relative viscosity in sulfuric acid solution of the polyamide resin after melt resistance at the melting point + 30°C for 1 hour is Y, then Y/X is 1.00 to 1.30. It is not preferred that Y/X is less than 1.00, since the polyamide resin is decomposed. On the other hand, it is not preferred either that Y/X is more than 1.30, since the mold processability becomes unstable while the flowability declines. In this invention, since the total content of 2,3,4,5-tetrahydropyridine and piperidine contained in pentamethylenediamine is kept at 0.10 wt% or less, a polyamide resin whose the relative viscosity in sulfuric acid solution does not decrease (not decomposed) after melt residence can be obtained.

During the melt residence of the polyamide resin in this invention, the polymerization reaction of mainly the end amino groups and the end carboxyl groups takes place, while the intramolecular cyclization reaction of pentamethylenediamine at the end takes place. In the latter reaction, since the end becomes non-reactive piperidine, the role as a polymerizable functional group vanishes. Consequently the reason why the polyamide resin composition in this invention is excellent in melt residence stability is probably that the latter reaction inhibits the viscosity increase caused by the former polymerization reaction. On the other hand, for example in nylon 610, the hexamethylenediamine at the end does not cause intramolecular cyclization reaction, and accordingly mainly the polymerization reaction takes place, being likely to cause viscosity increase during melt residence.

In this invention, in order to obtain a polyamide resin with excellent thermal resistance having a melting point of 200°C or higher, preferably 210°C or higher, it is preferred to use azelaic acid, sebacic acid, undecanedioic acid or dodecanedioic acid as the aliphatic dicarboxylic acid with 7 or more carbon atoms. In this description, the melting point is defined as the temperature of the endothermic peak observed by a differential scanning calorimeter during the process of heating to higher than the melting point, to reach a molten state, then cooling down to 30°C at a cooling rate of 20°C/min and in succession heating again to higher than the melting point at a heating rate of 20°C/min.

When the polyamide resin in this invention is produced, a polymerization accelerator can be added as required. Preferred examples of the polymerization accelerator include inorganic phosphorus compounds such as phosphoric acid, phosphorous acid, hypophosphorous acid, pyrophosphoric acid, polyphosphoric acid, alkali metal salts thereof and alkaline earth metal salts thereof, and especially sodium phosphite and sodium hypophosphite can be suitably used. It is preferred to use 0.001 to 1 part by weight of the polymerization accelerator per 100 parts by weight of the raw materials. If the amount of the polymerization accelerator used is less than 0.001 part by weight, the effect of adding the polymerization accelerator can be little observed, and if the amount is more than 1 part by weight, the degree of polymerization of the obtained polyamide resin rises too high, resulting in an tendency to make melt molding difficult.

In this invention, a fibrous filler can be mixed with the polyamide resin. Examples of the fibrous filler include glass fibers, carbon fibers, stainless steel fibers, aluminum fibers, brass fibers, aramid fibers, gypsum fibers, ceramic fibers, asbestos fibers, zirconia fibers, alumina fibers, silica fibers, titanium oxide fibers, silicon carbide fibers, rock wool, potassium titanate whiskers, silicon nitride whiskers, zinc oxide whiskers, aluminum borate whiskers, etc. Especially glass fibers and carbon fibers are preferably used.

It is preferred that the fibrous filler in the polyamide resin is longer, since the effect of enhancing mechanical properties such as tensile strength and flexural modulus is larger. In the case where the polyamide resin increases in viscosity during molding processing, the load is likely to act on the fibrous filler, to break it. Accordingly it is very effective to use the polyamide resin with excellent residence stability in this invention.

It is preferred to preliminarily treat the fibrous filler by a coupling agent such as an isocyanate-based compound, organic silane-based compound, organic titanate-based compound, organic borane-based compound or epoxy compound before use, since more excellent mechanical strength can be obtained. Especially preferred is an organic silane-based compound. Examples of the organic silane-based compound include epoxy group-containing alkoxysilane compounds such as γ-glycidoxypropyltrimethoxysilane, γ-glycidoxypropyltriethoxysilane and β-(3,4-epoxycyclohexyl)ethyltrimethoxysilane, mercapto group-containing alkoxysilane compounds such as γ-mercaptopropyltrimethoxysilane and γ-mercaptopropyltriethoxysilane, ureido group-containing alkoxysilane compounds such as γ-ureidopropyltriethoxysilane, γ-ureidopropyltrimethoxysilane and γ-(2-ureidoethyl)aminopropyltrimethoxysilane, isocyanato group-containing alkoxysilane compounds such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane and γ-isocyanatopropyltrichlorosilane, amino group-containing alkoxysilane compounds such as γ-(2-aminoethyl)aminopropylmethyldimethoxysilane, γ-(2-aminoethyl)aminopropyltrimethoxysilane and γ-aminopropyltrimethoxysilane, hydroxyl group-containing alkoxysilane compounds such as γ-hydroxypropyltrimethoxysilane and γ-hydroxypropyltriethoxysilane, carbon-carbon unsaturated group-containing alkoxysilane compounds such as γ-methacryloxypropyltrimethoxysilane, vinyltrimethoxysilane and N-β-(N-vinylbenzylaminoethyl)-γ-aminopropyltrimethoxysilane hydrochloride, and acid anhydride group-containing alkoxysilane compounds such as 3-trimethoxysilylpropylsuccinic anhydride. Especially γ-methacryloxypropyltrimethoxysilane, γ-(2-aminoethyl)aminopropylmethyldimethoxysilane, γ-(2-aminoethyl)aminopropyltrimethoxysilane, γ-aminopropyltrimethoxysilane and 3-trimethoxysilylpropylsuccinic anhydride can be preferably used. A conventional method in which the surface of the fibrous fillers in pretreated with any of these silane coupling agents and subsequently they are melt-kneaded with the polyamide resin can be preferably used. However, the so-called integral blending method of adding any of these coupling agents when melt-kneading the fibrous filler with the polyamide resin without pretreating the surface of the fibrous filler can also be used.

It is preferred that the amount of the coupling agent used for treating is 0.05 to 10 parts by weight per 100 parts by weight of the fibrous filler. A more preferred range is 0.1 to 5 parts by weight, and the most preferred range is 0.5 to 3 parts by weight. If the amount is less than 0.05 part by weight, the effect of enhancing the mechanical properties by treating with the coupling agent is small, and if the amount is more than 10 parts by weight, the fibrous filler is likely to be aggregated, resulting in a tendency to cause dispersion failure.

The mixed amount of the fibrous filler in this invention is 0.1 to 200 parts by weight per 100 parts by weight of the polyamide resin. A preferred range is 1.1 to 100 parts by weight, and a more preferred range is 5 to 80 parts by weight. A further more preferred range is 7.5 to 70 parts by weight, and the most preferred range is 10 to 60 parts by weight. If the amount is less than 0.1 part by weight, the effect of enhancing the tensile strength is small, and if the amount is more than 200 parts by weight, it is difficult to uniformly disperse in the polyamide resin, resulting in a tendency to lower the tensile strength.

In this invention, in order to intensify the interface between the polyamide resin and the fibrous filler, in addition to the treatment of the fibrous filler by the coupling agent, it is preferred to mix at least one selected from maleic anhydride, itaconic anhydride, glutaconic anhydride, citraconic anhydride, aconitic anhydride and polymaleic anhydride. Among them, maleic anhydride and polymaleic anhydride can be preferably used since the balance between ductility and stiffness can be excellent. For example, the polymaleic anhydride that stated in J. Macromol. Sci. -Revs. Macromol. Chem., C13 (2), 235 (1975), etc. can be used.

It is preferred that the added amount of any of these acid anhydrides is 0.05 to 10 parts by weight per 100 parts by weight of the polyamide resin in view of the effect of enhancing ductility and in view of the flowability of the obtained composition. A more preferred range is 0.1 to 5 parts by weight, and a further more preferred range is 0.1 to 3 parts by weight. A still further more preferred range is 0.1 to 1 part by weight.

Meanwhile, any of the acid anhydrides is only required to have an anhydride structure substantially at the time of being melt-kneaded with the polyamide resin and the fibrous filler. It can be hydrolyzed to be subjected to melt kneading as a carboxylic acid or an aqueous solution thereof, and at the time of melt kneading, it can be heated to perform a dehydration reaction, to be provided substantially as an anhydride for being melt-kneaded with the polyamide.

In this invention, an impact strength modifier can be further mixed. The impact strength modifier can be a (co)polymer obtained by polymerizing an olefin-based compound and/or a conjugated diene-based compound. Examples of the olefin-based compound include α-olefins such as ethylene, vinyl-based compounds such as vinyl acetate, vinyl alcohol and aromatic vinyls, non-conjugated dienes, α,β-unsaturated carboxylic acids, derivative thereof, etc. As the abovementioned (co)polymer, an ethylene-based copolymer, conjugated diene-based polymer, conjugated diene-aromatic vinyl hydrocarbon-based copolymer or the like can be preferably used. The ethylene-based copolymer in this description refers to a copolymer consisting of ethylene and another monomer or a multi-component copolymer consisting of ethylene and other monomers. The other monomer(s) to be copolymerized with ethylene can be selected from α-olefins with 3 or more carbon atoms, non-conjugated dienes, vinyl acetate, vinyl alcohol, α,β-unsaturated carboxylic acids and derivatives thereof, etc.

Examples of the α-olefins with 3 or more carbon atoms include propylene, butene-1, pentene-1,3-methylpentene-1, octacene-1, etc., and propylene and butene-1 can be preferably used. Examples of the non-conjugated dienes include norbornene compounds such as 5-methylidene-2-norbornene, 5-ethylidene-2-norbornene, 5-vinyl-2-norbornene, 5-propenyl-2-norbornene, 5-isopropenyl-2-norbornene, 5-crotyl-2-norbornene, 5-(2-methyl-2-butenyl)-2-norbornene, 5-(2-ethyl-2-buteneyl)-2-norbornene and 5-methyl-5-vinylnorbornene, dicyclopentadiene, methyltetrahydroindene, 4,7,8,9-tetrahydroindene, 1,5-cyclooctadiene-1,4-hexadiene, isoprene, 6-methyl-1,5-heptadiene and 11-tridecadiene, etc. Preferred are 5-methylidene-2-norbornene, 5-ethylidene-2-norbornene, dicyclopendadiene, 1,4-hexadiene, etc. Examples of the α,β-unsaturated carboxylic acids include acrylic acid, methacrylic acid, ethacrylic acid, crotonic acid, maleic acid, fumaric acid, itaconic acid, citraconic acid, butenedicarboxylic acid, etc. Examples of the derivatives thereof include alkyl esters, aryl esters, glycidyl esters, acid anhydrides and imides. Further, a conjugated diene-based polymer refers to a polymer derived from one or more conjugated diene monomers, i.e., a homopolymer of a single conjugated diene such as 1,3-butadiene or a copolymer of two or more conjugated dienes such as 1,3-butadiene, isoprene (2-methyl-1,3-butadiene), 2,3-dimethyl-1,3-butadiene and 1, 3-pentadiene. These polymers in which some or all of unsaturated bonds are reduced by hydrogenation can also be preferably used.

A conjugated diene-aromatic vinyl hydrocarbon-based copolymer is a block copolymer or random copolymer in which the ratio between the conjugated diene and the aromatic vinyl hydrocarbon can be various. Examples of the conjugated diene constituting the copolymer include the aforementioned monomers, and especially 1,3-butadiene and isoprene are preferably used. Examples of the aromatic vinyl hydrocarbon include styrene, α-methylstyrene, o-methylstyrene, p-methylstyrene, 1,3-dimethylstyrene, vinylnaphthalene, etc., and among them, styrene can be preferably used. Further, a conjugated diene-aromatic vinyl hydrocarbon-based copolymer in which some or all of the unsaturated bonds other than aromatic rings are reduced by hydrogenation can also be preferably used.

It is preferred to use any of these impact strength modifiers, which has a glass transition temperature (in this description, defined as the peak temperature of loss elastic modulus (E") obtained in the dynamic viscoelasticity measurement at a frequency of 1 Hz) of -20°C or lower, in order to obtain a higher impact strength.

Two or more of these impact strength modifiers can also be used together.

Further, in order to reduce the particle diameter of the abovementioned impact strength modifier dispersed in the resin composition, a (co)polymer obtained by graft-reacting or copolymerizing any of various unsaturated carboxylic acids and/or a derivative thereof or a vinyl monomer to a portion or the whole of the impact strength modifier can also be preferably used. In this case, it is preferred that the amount of the unsaturated carboxylic acid and/or the derivative thereof or the vinyl monomer graft-reacted or copolymerized to the entire impact strength modifier is 0.01 to 20 wt%. Examples of the unsaturated carboxylic acid used for the graft reaction or copolymerization include acrylic acid, methacrylic acid, ethacrylic acid, crotonic acid, maleic acid, fumaric acid, itaconic acid, citraconic acid, butenedicarboxylic acid, etc. Examples of the derivative thereof include an alkyl ester, glycidyl ester, an ester having a di- or tri-alkoxysilyl group, acid anhydride, imide, etc. Among them, a glycidyl ester, an unsaturated carboxylic acid ester having a di- or tri-alkoxysilyl group, acid anhydride and imide are preferred.

Preferred examples of the unsaturated carboxylic acid or the derivative thereof include maleic acid, fumaric acid, glycidyl acrylate, glycidyl methacrylate, itaconic acid diglycidyl ester, citraconic acid diglycidyl ester, butenedicarboxylic acid diglycidyl ester, butenedicarboxylic acid monoglycidyl ester, maleic anhydride, itaconic anhydride, citraconic anhydride, maleic acid imide, itaconic acid imide, citraconic acid, imide, etc. Especially glycidyl methacrylate, maleic anhydride, itaconic anhydride and maleic acid imide can be preferably used. Further, examples of the vinyl monomer include aromatic vinyl compounds such as styrene, vinyl cyanide compounds such as acrylonitrile, and vinylsilane compounds such as vinyltrimethoxysilane. Two or more of these unsaturated carboxylic acids, derivatives thereof or vinyl monomers can also be used together. Meanwhile, as the method for grafting any of these unsaturated carboxylic acids, derivatives thereof or vinyl monomers, a publicly known method can be used.

The amount of the impact strength modifier mixed with 100 parts by weight of the polyamide resin in this invention is in a range from 1 to 100 parts by weight. In order to impart toughness and stiffness in good balance, a range from 5 to 70 parts by weight is preferred.

In this invention, a flame retarder can be further mixed. Examples of the flame retarder include non-halogen-based flame retarders not containing a halogen atom, such as phosphorus-based flame retarders, nitrogen-based flame retarders and metal hydroxide-based flame retarders, and halogen-based flame retarders typified by bromine-based flame retarders. Any of these flame retarders can also be used alone, or two or more of them can also be used together.

It is preferred that the amount of the flame retarder mixed with 100 parts by weight of the polyamide resin is 1 to 50 parts by weight. If the mixed amount is less than 1 part by weight, flame retardancy tends to be poor. Further, if the amount is more than 50 parts by weight, toughness tends to remarkably decline.

Examples of the phosphorus-based flame retarders include red phosphorus, polyphosphate-based compounds such as ammonium polyphosphate and melamine polyphosphate, metal (di)phosphinates, phosphazene compounds, aromatic phosphate, aromatic condensed phosphate, halogenated phosphate, etc.

A (di)phosphinate is produced, for example, from a phosphinic acid along with a metal carbonate, metal hydroxide or metal oxide in an aqueous medium. A (di)phosphinate is originally a monomeric compound, but depending on reaction conditions, it may also be a polymeric phosphinate with a degree of polymerization of 1 to 3 in a certain environment. Examples of the phosphinic acid include dimethylphosphinic acid, ethylmethylphosphinic acid, diethylphosphinic acid, methyl-n-propylphosphinic acid, methanedi(methylphosphinic acid), benzene-1,4-(dimethylphosphinic acid), methylphenylphosphinic acid, diphenylphosphinic acid, etc. Further, examples of the metal compound (M) to react with any of the abovementioned phosphinic acids include a metal carbonate, metal hydroxide and metal oxide containing calcium ions, magnesium ions, aluminum ions and/or zinc ions. Examples of the phosphinate include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphneylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, zinc diphenylphosphinate, etc. Examples of the diphosphinate include calcium methanedi(methylphosphinate), magnesium methanedi(methylphosphinate), aluminum methanedi(methylphosphinate), zincmethanedi(methylphosphinate), calcium benzene-1,4-di(methylphosphinate), magnesium benzene-1,4-di(methylphosphinate), aluminum benzene-1,4-di(methylphosphinate), zinc benzene-1,4-di(methylphosphinate), etc. Among these (di)phosphinates, especially in view of flame retardancy and electric properties, aluminum ethylmethylphosphinate, aluminum diethylphosphinate and zinc diethylphosphinate are preferred.

A phosphazene compound is an organic compound having a -P=N-bond in the molecule, being preferably at least one compound selected from a cyclic phenoxyphosphazene compound, linear phenoxyphosphazene compound and crosslinked phenoxyphosphazene compound. The cyclic phenoxyphosphazene compound is, for example, such a compound as phenoxycyclotriphosphazene, octaphenoxycyclotetraphosphazene or decaphenoxycyclopentaphosphazene obtained by taking out a cyclic chlorophosphazene such as hexachlorocyclotriphosphazene, octachlorocyclotetraphosphazene or decachlorocyclopentaphosphazene from the cyclic or linear chlorophosphazene mixture obtained by reacting ammonium chloride with phosphorus pentachloride at a temperature of 120 to 130°C, and subsequently substituting by phenoxy groups. The linear phenoxyphosphazene compound is, for example, a compound obtained by ring-opening-polymerizing the hexachlorocyclotriphosphazene obtained by the abovementioned method at a temperature of 220 to 250°C, and substituting the obtained linear dichlorophosphazene having a degree of polymerization of 3 to 10,000 by phenoxy groups. The crosslinked phenoxyphosphazene compound is, for example, a compound having a crosslinked structure of 4,4'-diphenylene groups such as a compound having a crosslinked structure of 4,4'-sulfonyldiphenylene (bisphenol S residues), a compound having a crosslinked structure of 2,2-(4,4'-diphenylene)isopropylidene groups, a compound having a crosslinked structure of 4,4'-oxydiphenylene groups or a compound having a crosslinked structure of 4,4'-thiodiphenylene groups. The content of the phenylene groups in the crosslinked phenoxyphosphazene compound is usually 50 to 99.9%, preferably 70 to 90% based on the number of all the phenyl groups and phenylene groups in the cyclic phosphazene compound and/or linear phenoxyphosphazene compound. It is especially preferred that the crosslinked phenoxyphosphazene compound is a compound having no free hydroxyl groups in the molecule.

An aromatic phosphate is a compound produced by the reaction between phosphorus oxychloride and a phenol or a mixture consisting of a phenol and an alcohol. Examples of the aromatic phosphate include triphenyl phosphate, tricresyl phosphate, trixylenyl phosphate, cresyldiphenyl phosphate, 2-ethylhexyldiphenyl phosphate and butylated phenyl phosphates such as t-butylphenyldiphenyl phosphate, bis-(t-butylphenyl)phenyl phosphate and tris-(t-butylphenyl) phosphate, propylated phenyl phosphates such as isopropylphenyldiphenyl phosphate, bis-(isopropylphenyl)diphenyl phosphate and tris-(isopropylphenyl) phosphate.

The aromatic condensed phosphate is a reaction product of phosphorus oxychloride, divalent phenol-based compound and phenol (or alkylphenol). Examples of the aromatic condensed phosphate include resorcinol bis(diphenyl phosphate), resorcinol bis(dixylenyl phosphate), bisphenol A bis(diphenyl phosphate), etc.

The halogenated phosphate can be produced by reacting an alkylene oxide with phosphorus oxychloride in the presence of a catalyst. Examples of the halogenated phosphate include tris(chloroethyl) phosphate, tris(β-chloropropyl) phosphate, tris(dichloropropyl) phosphate, tetrakis(2-chloroethyl)dichloroisopentyl diphosphate, polyoxyalkylene bis(dichloroalkyl) phosphate, etc.

It is preferred that the mixed amount of the phosphorus-based flame retarder is 1 to 50 parts by weight per 100 parts by weight of the polyamide resin. A more preferred range is 2 to 40 parts by weight, and a further more preferred range is 3 to 35 parts by weight.

The nitrogen-based flame retarder can be a compound capable of forming a salt of a triazine-based compound and cyanuric acid or isocyanuric acid. The salt consisting of a triazine-based compound and cyanuric acid or isocyanuric acid is the addition product of a triazine-based compound and cyanuric acid or isocyanuric acid, being an addition product of usually 1 : 1 (molar ratio), or as the case may be, 2 : 1 (molar ratio) . A triazine-based compound that does not form a salt with cyanuric acid or isocyanuric acid is excluded. Especially preferred examples of the triazine-based compound capable of forming a salt with cyanuric acid or isocyanuric acid include the salts of melamine, mono(hydroxymethyl)melamine, di(hydroxymethyl)melamine, tri(hydroxymethyl)melamine, benzoguanamine, acetoguanamine, and 2-amide-4,6-diamino-1,3,5-triazine. Especially the salts of melamine, benzoguanamine and acetoguanamine are preferred. Examples of the salt consisting of a triazine-based compound and cyanuric acid or isocyanuric acid include melamine cyanurate, mono(β-cyanoethyl) isocyanurate, bis(β-cyanoethyl) isocyanurate, tris(β-cyanoethyl) isocyanurate, etc. Especially melamine cyanurate is preferred.

It is preferred that the mixed amount of the nitrogen-based flame retarder is 1 to 50 parts by weight per 100 parts by weight of the polyamide resin. A more preferred range is 3 to 30 parts by weight, and a further more preferred range is 5 to 20 parts by weight.

Examples of the metal hydroxide-based flame retarder include magnesium hydroxide, aluminum hydroxide, etc. Magnesium hydroxide is more preferred. They are usually commercially available and are not especially limited in particle size, specific surface area, form or the like. However, it is preferred that the particle size is 0.1 to 20 *µ*m, that the specific surface area is 3 to 75 m²/g, and that the form is spheres, needles or flakes. The metal hydroxide-based flame retarder is not required to be treated on the surface or may also be treated on the surface. Examples of the surface treatment method include covering with a silane coupling agent, anionic surfactant, polyvalent functional organic acid or thermosetting resin such as epoxy resin.

It is preferred that the mixed amount of the metal hydroxide-based flame retarder is 1 to 50 parts by weight per 100 parts by weight of the polyamide resin. A more preferred range is 10 to 50 parts by weight, and a further more preferred range is 20 to 50 parts by weight.

The bromine-based flame retarder used in this invention is not especially limited if it is a compound containing bromine in the chemical structure, and a publicly known ordinary flame retarder can be used. Examples of it include monomer-based organic bromine compounds such as hexabromobenzene, pentabromotoluene, hexabromobiphenyl, decabromobiphenyl, hexabromocyclodecane, decabromodiphenyl ether, octabromodiphenyl ether, hexabromodiphenyl ether, bis(pentabromophenoxy)ethane, ethylene-bis(tetrabromophthalimide) and tetrabromobisphenol A, and halogenated polymer-based bromine compounds such as a brominated polycarbonate (for example, a polycarbonate oligomer produced from brominated bisphenol A as a raw material, or its copolymer with bisphenol A), brominated epoxy compound (for example, a diepoxy compound produced by reaction between brominated bisphenol A and epichlorohydrin, or a monoepoxy compound obtained by reaction between a brominated phenol and epichlorohydrin), poly(brominated benzyl acrylate), brominated polyphenylene ether, brominated bisphenol A, condensed product of cyanuric chloride and brominated phenol, brominated polystyrene including brominated polystyrene, poly(brominated styrene) and crosslinked brominated polystyrene, and halogenated polymer-based bromine compound such as crosslinked or non-crosslinked brominated poly (methylstyrene) . Among them, preferred are ethylene bis(tetrabromophthalimide), brominated epoxy polymer, brominated polystyrene, crosslinked brominated polystyrene, brominated polyphenylene ether and brominated polycarbonate. Brominated polystyrene, crosslinked brominated polystyrene, brominated polyphenylene ether and brominated polycarbonate can be most preferably used.

It is preferred that the mixed amount of the bromine-based flame retarder is 1 to 50 parts by weight per 100 parts by weight of the polyamide resin. A more preferred range is 10 to 50 parts by weight, and a further more preferred range is 20 to 50 parts by weight.

Further, it is also preferred to mix a flame retardant aid together with the abovementioned brominated flame retarder in order to synergetically enhance the flame retardancy. Examples of the flame retardant aid include antimony trioxide, antimony tetraoxide, antimony pentoxide, antimony dodecanoxide, crystalline antimonic acid, sodium antimonate, lithium antimonate, barium antimonate, antimony phosphate, zinc borate, zinc stannate, basic zinc molybdate, calcium zinc molybdate, molybdenum oxide, zirconium oxide, zinc oxide, iron oxide, red phosphorus, swelling graphite, carbon black, etc. Among them, antimony trioxide and antimony pentoxide are more preferred. In view of the effect of enhancing the flame retardancy, it is preferred that the mixed amount of the flame retardant aid is 0.2 to 30 parts by weight per 100 parts by weight of the polyamide resin. A more preferred range is 1 to 20 parts by weight.

The method for preparing the composition obtained by mixing a fibrous filler with a polyamide resin in this invention is not especially limited. For example, a method in which a polyamide resin and a fibrous filler as raw materials are supplied into a publicly known melt-kneading machine such as a single screw or twin screw extruder for melt kneading can be used. The screw configuration such as the same direction or different directions, deep channel or shallow channel, single-threaded, double-threaded or triple-threaded screw is not especially limited. However, a screw pattern in which the fibrous filler is unlikely to be broken by melt kneading while shear heat is unlikely to be generated is preferred.

Further, with regard to the method for preparing a composition containing an impact strength modifier and a flame retarder, in the case where a melt-kneading machine is used, it is effective to control the L/D (screw length/screw diameter) of the kneading machine, use/nouse of a vent, kneading temperature, residence time, the positions where respective ingredients are added, and the added amounts of the respective ingredients. In general, a melt-kneading machine with a longer L/D value and a longer residence time is preferred since the uniform dispersion of the impact strength modifier and the flame retarder can be promoted. However, it must be noted that if the residence is excessively long, the raw materials may be decomposed.

To the polyamide resin in this invention, other ingredients can be mixed to such an extent that the effect of this invention may not be impaired. Examples of the other ingredients include an antioxidant and heat resistance stabilizer (hindered phenol-based compounds, hydroquinone-based compounds, phosphite-based compounds, substitution products thereof, copper halides, iodine compounds, etc.), anti-weathering agent (resorcinol-based compounds, salicylate-based compounds, benzotriazole-based compounds, benzophenone-based compounds, hindered amine-based compounds, etc.), releasing agent and lubricant (aliphatic alcohols, aliphatic amides, aliphatic bisamides, bisurea and polyethylene wax, etc.), pigment (cadmium sulfide, phthalocyanine, carbon black, etc.), dye (nigrosine, aniline black, etc.), plasticizer (octyl p-oxybenzoate, N-butylbenzenesulfonamide, etc.), antistatic agent (alkyl sulfate type anionic antistatic agents, quaternary ammonium salt type cationic antistatic agents, nonionic antistatic agents such as polyoxyethylene sorbitan monostearate, betaine-based amphoteric antistatic agents, etc.), other polymer (polyamide resin other than the main ingredient, polyethylene, polypropylene, polyester, polycarbonate, polyphenylene ether, polyphenylene sulfide, liquid crystal polymer, polysulfone, polyether sulfone, ABS resin, SAN resin, polystyrene, etc.). They can be mixed at arbitrary points of time.

Examples of the hindered phenol-based antioxidant include 2,4-dimethyl-6-t-butylphenol, 2,6-di-t-butylphenol, 2,6-di-t-butyl-p-cresol, 2,6-di-t-butyl-4-ethylphenol, 4,4'-butylidenebis(6-t-butyl-3-methylphenol), 2,2'-methylene-bis(4-methyl-6-t-butylphenol), 2,2'-methylene-bis(4-ethyl-6-t-butylphenol), octadecyl-3-(3',5'-di-t-butyl-4'-hydroxyphenyl)propionate, tetrakis[methylene-3-(3,5-di-t-butyl-4-hydroxyphenyl)propionat e]methane, pentaerythrityl-tetrakis[3-(3',5'-di-t-butyl-4'-hydroxyphenyl) propionate], 3,9-bis[2-(3-(3-t-butyl-4-hydroxy-5-methylphenyl)propionyloxy) -1,1-dimethylethyl]-2,4,8,10-tetraoxaspiro[5,5]undecane, 1,1,3-tris(2-methyl-4-hydroxy-5-di-t-butylphenyl)butane, tris(3,5-di-t-butyl-4-hydroxybenzyl)isocyanurate, triethyleneglycol-bis[3-(3-t-butyl-5-methyl-4-hydroxyphenyl)pr opionate], 1,6-hexanediol-bis[3-(3,5-di-t-butyl-4-hydroxyphenyl)propionat e], 2,4-bis-(n-octylthio)-6-(4-hydroxy-3,5-di-t-butylanilino)-1,3, 5-triazine, 2,2-thio-diethylenebis[3-(3,5-di-t-butyl-4-hydroxyphenyl)propi onate], N,N'-hexamethylene-bis(3,5-di-t-butyl-4-hydroxyhydrocinnamide), 3,5-di-t-butyl-4-hydroxybenzylphosphonate-diethyl ester, 1,3,5-trimethyl-2,4,6-tris(3,5-di-t-butyl-4-hydroxybenzyl)benz ene, 2,4-bis[(octylthio)methyl]-o-cresol, isooctyl-3-(3,5-di-t-butyl-4-hydroxyphenyl)propionate, etc. Especially an ester type polymeric hindered phenol compound is preferred. Preferred examples of it include tetrakis[methylene-3-(3',5'-di-t-butyl-4'-hydroxyphenyl)propio nate]methane, pentaerythrityl tetrakis[3-(3',5'-di-t-butyl-4'-hydroxyphenyl)propionate], 3,9-bis[2-(3-(3-t-buyl-4-hydroxy-5-methylphenyl)propionyloxy)-1,1-dimethylethyl]-2,4,8,10-tetraoxaspiro[5,5]undecane, etc.

Examples of the phosphite-based compound include bis(2,6-di-t-butyl-4-methylphenyl)pentaerythritol-di-phosphite, bis(2,4-di-t-butylphenyl)pentaerythritol-di-phosphite, bis(2,4-dicumylphenyl)pentaerythritol-di-phosphite, tris(2,4-di-t-butylphenyl)phosphite, tetrakis(2,4-di-t-butylphenyl)-4,4'-bisphenylene phosphite, di-stearylpentaerythritol-di-phosphite, triphenyl phosphite, 3,5-di-butyl-4-hydroxybenzyl phosphonate diethyl ester, etc.

Any one of these antioxidants may be used alone or two or more of them can also be used in combination, since a synergetic effect may be obtained as the case may be. The mixed amount of the antioxidant is not especially limited, but it is preferred that the mixed amount is 0.01 to 20 parts by weight per 100 parts by weight of the polyamide resin.

Further, examples of the heat resistance stabilizer include inorganic acid copper compounds such as copper halides including copper fluoride, copper chloride, copper bromide and copper iodide, copper oxide, copper sulfate and copper nitrate, organic acid copper compounds such as copper acetate, copper laurate, copper stearate, copper naphthenate and copper caprate. Among them, copper iodide and copper acetate are preferred. Copper iodide is more preferred. The mixed amount of the heat resistance stabilizer is 0.01 to 0.3 part by weight per 100 parts by weight of the polyamide resin. An especially preferred range is 0.01 to 0.1 part by weight. Further, also when a copper compound and an alkali halide are used together, high heat resistance can be obtained. Examples of the alkali halide include potassium iodide, magnesium iodide, etc. Preferred is potassium iodide. It is preferred that the mixed amounts are such that the number of halogen atoms in the alkali halide per one copper atom in the copper compound is 0.3 to 4 atoms.

Examples of the other polyamide resin other than the main ingredient, which can be mixed in this invention, include aliphatic polyamides such as nylon 6, nylon 66, nylon 46, nylon 56, nylon 610, nylon 612, nylon 410, nylon 412, nylon 11 and nylon 12, aliphatic-aromatic polyamides such as poly(m-xylene adipamide) (hereinafter abbreviated as MXD6), poly(pentamethylene terephthalamide) (hereinafter abbreviated as 5T), poly(pentamethylene isophthalamide) (hereinafter abbreviated as 5I), poly (hexamethylene terephthalamide) (hereinafter abbreviated as 6T), poly(hexamethylene isophthalamide) (hereinafter abbreviated as 6I), poly(nonamethylene terephthalamide) (hereinafter abbreviated as 9T), polytetramethylene terephthalamide (hereinafter abbreviated as 4T), poly(tetramethylene isophthalamide) (hereinafter abbreviated as 4I), poly (decamethylene terephthalamide) (hereinafter abbreviated as 10T), and poly(decamethylene isophthalamide) (hereinafter abbreviated as 10I), copolymers thereof (6/66, 56/5T, 5T/5I, 5T/11, 5T/12, 5T/10T, 66/6T, 6T/6I, 6T/11, 6T/12, 6T/10T), etc. It is preferred that the mixed amount of the other polyamide resin is 1 to 40 parts by weight per 100 parts by weight of the polyamide resin.

The polyamide resin and the polyamide resin composition in this invention can be molded into desired shapes by any desired molding method such as injection molding, extrusion molding, blow molding, vacuum molding, melt spinning or film molding, and the molded resin articles can be used as automobile parts, machine parts, etc. Particular applications include automobile engine cooling water system parts used in contact with cooling water in automobile engine rooms such as radiator tank parts like radiator tank tops and bases, parts, coolant reserve tanks, water pipes, water pump housings, water pump impellers, valves and other water pump parts, electric and electronic apparatus-related parts, automobile- and vehicle-related parts, household and office electric appliance-related parts, computer-related parts, facsimile- and copier-related parts and machine-related parts typified by switches, miniature slide switches, DIP switches, switch housings, lamp sockets, banding bands, connectors, connector housings, connector shells, IC sockets, coil bobbins, bobbin covers, relays, relay boxes, capacitor cases, internal parts of motors, small motor cases, gears and cams, dancing pulleys, spacers, insulators, fasteners, buckles, wire clips, bicycle wheels, casters, helmets, terminal blocks, motor-driven tool housings, starter insulator components, spoilers, canisters, radiator tanks, chamber tanks, reservoir tanks, fuse boxes, air cleaner cases, air conditioner fans, terminal housings, wheel covers, suction/exhaust pipes, bearing retainers, cylinder head covers, intake manifolds, water pipe impellers, clutch releases, speaker diaphragms, heat resistant containers, electronic oven parts, rice cooker parts and printer ribbon guides, and other various applications. Especially in the case where a long article is produced by injection molding, since the resin flow length is long, the solidified layer on the surface of the mold near the gate grows to narrow the resin passage. Further, in the case where the matrix resin is likely to increase in viscosity, the molded article is likely to be short. Furthermore, in the case where a fibrous filler is mixed, the fibrous filler gives a load, and it is likely to be broken. Therefore, the polyamide resin and the polyamide resin composition excellent in residence stability in this invention can be suitably molded for producing large and long articles. A molded article with a length/width ratio of 5 or more is defined as a long molded article, and a molded article with a length/width ratio of 5 or more and a length of 300 mm or more is defined as a large and long molded article.

### EXAMPLES

### [Analysis of the impurities contained in the pentamethylenediamine used as a raw material]

GC-MS method was used to analyze under the following conditions:
GC/MS: HP6980/HP5973A
Column: NUKOL 30 m x 0.24 mm ID 0.2 µm film
Oven: 120°C (constant)
Inj: 200°C (Split 10 : 1)
Flow: He 2.4 ml/min (const. flow)
MS: 230°C (SCAN m/z = 30 to 400)

### [Extraction of a polyamide resin from a polyamide resin composition containing a fibrous filler]

10g of a polyamide resin composition was dissolved into 100 ml of hexafluoroisopropanol, and the solution was filtered to remove the fibrous filler. The filtrate was evaporated and the residue was dried in vacuum at 80°C for 12 hours, to obtain a polyamide resin extract.

### [Relative viscosity (ηr)]

At a concentration of 0.01 g/ml in 98% sulfuric acid, an Oswald viscometer was used to measure at 25°C.

### [Amino end group concentration]

0.5g of a polyamide resin was accurately weighed, and 25 ml of phenol/ethanol mixed solution (ratio 83.5/16.5 wt%) was added. The mixture was dissolved at room temperature, and subsequently titration was performed with 0.02N hydrochloric acid using thymol blue as an indicator.

### [Carboxyl end group concentration]

0.5g of a polyamide resin was accurately weighed, and 20 ml of benzyl alcohol was added. The mixture was dissolved at 195°C, and subsequently titration was performed with 0.02N potassium hydroxide ethanol solution using phenolphthalein as an indicator.

### [Melting point]

Using robot DSC RDC220 produced by SII Nanotechnology, approx. 5 mg of a sample was accurately weighed, and measurement was carried out in nitrogen atmosphere under the following conditions. The sample was heated to 280°C to a molten state, subsequently cooled to 30°C at a cooling rate of 20°/min and held at 30°C for 3 minutes, and subsequently heated to 280°C at a heating rate of 20°C/min. The temperature of the endothermic peak observed during this step (melting point) was determined.

### [Flexural modulus]

A rod-like specimen of 1/2 inch x 5 inches x 1/4 inch produced by injection molding (SG75H-MIV produced by Sumitomo Heavy Industries, Ltd., cylinder temperature set at the melting point + 25°C, mold temperature set at 80°C, and injection pressure set at the lower limit pressure + 5 kg/cm²) was used to perform a flexural test according to ASTM D790.

### [Tensile strength]

An ASTM No. 1 dumbbell produced by injection molding (SG75H-MIV produced by Sumitomo Heavy Industries, Ltd., cylinder temperature set at the melting point + 25°C, mold temperature set at 80°C, and injection pressure set at the lower limit pressure + 5 kg/cm²) was used to perform a tensile test according to ASTM D638.

### [Impact property]

A 1/8 inch thick notched molded article at 23°C produced by injection molding (SG75H-MIV produced by Sumitomo Heavy Industries, Ltd., cylinder temperature set at the melting point + 25°C, mold temperature set at 80°C, and injection pressure set at the lower limit pressure + 5 kg/cm²) was used to measure the Izod impact strength according to ASTM D256.

### [Water absorption coefficient]

An ASTM No. 1 dumbbell was immersed in water and treated in a 50°C hot air oven for 200 hours, and the water absorption coefficient was calculated from the difference in weighs between before and after the treatment.

### [LLC resistance]

An ASTM No. 1 dumbbell produced by injection molding (SG75H-MIV produced by Sumitomo Heavy Industries, Ltd., cylinder temperature set at the melting point + 25°C, mold temperature set at 80°C, and injection pressure set at the lower limit pressure + 5 kg/cm²) was immersed in 50 wt% LLC (Toyota Genuine Long Life Coolant produced by Toyota Motor Corp.) aqueous solution, and treated in an autoclave at 130°C for 500 hours, to subsequently measure the tensile strength retention.

### [Residence stability]

From the relative viscosity (Y) in sulfuric acid solution of a polyamide resin held in nitrogen atmosphere at a temperature of the melting point + 30°C for 1 hour and the relative viscosity (X) in sulfuric acid solution of the polyamide resin before the melt residence, Y/X was obtained. Meanwhile, in the case of a polyamide resin composition, the polyamide resin was respectively extracted from the compositions before and after the residence, and Y/X was obtained.

### [Evaluation of molding stability of a long molded article]

An injection molding machine (J220EII-2M produced by The Japan Steel Works, Ltd., cylinder temperature set at the melting point + 60°C, and mold temperature set at 80°C) was used to continuously mold long molded pieces of 500 mm long x 50 mm wide x 3 mm thick at the lowest injection pressure for 1 hour. A case where any molded piece became short is indicated by x, and a case where no molded piece became short is indicated by o.

### [Flame retardancy]

A 1/32 inch thick sample was measured according to the method of UL94 (Underwriter Laboratories Inc.).

### Reference Example 1 (preparation of a lysine decarboxylase)

*E. coli* JM109 strain was cultured as described below. At first, one platinum loop of the strain was inoculated into 5 ml of an LB medium and the inoculated medium was shaken at 30°C for 24 hours, to preculture the strain. Then, 50 ml of an LB medium was placed into a 500 ml Erlenmeyer flask and sterilized by steam at 115°C for 10 minutes beforehand. The abovementioned precultured strain was subcultured in the sterilized medium at an amplitude of 30 cm and at 180 rpm with the pH adjusted to 6.0 by 1N hydrochloric acid aqueous solution for 24 hours. The funguses obtained as described above were collected and ultrasonically crushed and centrifuged to prepare a cell-free extract. The lysine decarboxylase activity of the extract was measured according to an established method (Kenji Souda and Haruo Misono, "Seikagaku Jikken Koza" (= Lectures on Biochemical Experiments), vol. 11-jo, pages 179 to 191, 1976). The use of lysine as a substrate, could cause the conversion by lysine monooxygenase, lysine oxidase and lysine mutase considered to be a main path. Therefore, for the purpose of blocking this reaction system, the cell-free extract of *E*. *coli* JM109 strain was heated at 75°C for 5 minutes. Further, the cell-free extract was fractionated by 40% saturated and 55% saturated ammonium sulfate. The crude lysine decarboxylase solution obtained like this was used to produce pentamethylenediamine from lysine.

### Reference Example 2 (Production of pentamethylenediamine)

1000ml of an aqueous solution composed of 50 mM lysine hydrochloride (produced by Wako Pure Chemical Industries, Ltd.), 0.1 mM pyridoxal phosphate (produced by Wako Pure Chemical Industries, Ltd.) and 40 mg/L crude lysine decarboxylase (prepared in Reference Example 1) was reacted at 45°C for 48 hours while the pH was kept in a range from 5.5 to 6.5 by 0.1N hydrochloric acid aqueous solution, to obtain pentamethylenediamine hydrochloride. To the aqueous solution, sodium hydroxide was added to convert the pentamethylenediamine hydrochloride into pentamethylenediamine, which was then extracted with chloroform. The extract was distilled under reduced pressure (10 mm Hg, 60°C), to obtain pentamethylenediamine. The pentamethylenediamine contained 0.18 wt% of 2,3,4,5-tetrahydropyridine and 0.011 wt% of piperidine.

### Reference Example 3 (Production of pentamethylenediamine)

The pentamethylenediamine obtained in Reference Example 2 was distilled under reduced pressure repetitively further twice, to obtain pentamethylenediamine. The pentamethylenediamine contained 0.05 wt% of 2,3,4,5-tetrahydropyridine, and piperidine was not detected.

### Reference Example 4 (Production of pentamethylenediamine)

The pentamethylenediamine obtained in Reference Example 3 was distilled under reduced pressure repetitively further twice, to obtain pentamethylenediamine. In the pentamethylenediamine, neither 2,3,4,5-tetrahydropyridine nor piperidine was detected.

### Reference Example 5 (Production of nylon 510)

A 3-liter pressure vessel was charged with 1,500 g (2.46 mol) of 50wt% an aqueous solution containing an equimolar salt of the pentamethylenediamine produced in Reference Example 2 and sebacic acid (produced by Tokyo Chemical Industry Co., Ltd.) and 1.51 g (0.0148 mol) of the pentamethylenediamine, and hermetically sealed. The internal atmosphere was replaced by nitrogen. Heating was started, and after the pressure in the vessel reached 17.5 kg/cm², the water was discharged outside the system, while the pressure in the vessel was kept at 17.5 kg/cm² for 1.5 hours. Then, the pressure in the vessel was returned to atmospheric pressure, taking 1 hour, and further at a reduced pressure of -160 mm Hg and at 260°C, a reaction was performed for 1 hour, to complete polymerization. Subsequently, the polymer was discharged from the polymerization vessel as a gut and pelletized, being dried in vacuum at 80°C for 24 hours, to obtain nylon 510 of ηr = 2.03, amino end group concentration = 9.81 x 10⁻⁵ mol/g, carboxyl end group concentration = 8.06 x 10⁻⁵ mol/g and Tm = 197°C.

### Reference Example 6 (Production of nylon 510)

By the same method as in Reference Example 5 except that the pentamethylenediamine produced in Reference Example 3 was used, nylon 510 of ηr = 2.72, amino end group concentration = 5.95 x 10⁻⁵ mol/g, carboxyl end group concentration = 6.17 x 10⁻⁵ mol/g and Tm = 218°C was obtained.

### Reference Example 7 (Production of nylon 510)

By the same method as in Reference Example 5 except that the pentamethylenediamine produced in Reference Example 4 was used, nylon 510 of ηr = 2.76, amino end group concentration = 6.01 x 10⁻⁵ mol/g, carboxyl end group concentration = 5.84 x 10⁻⁵ mol/g and Tm = 218°C was obtained.

### Reference Example 8 (Production of nylon 59)

A 3-liter pressure vessel was charged with 1,500 g (2.58 mol) of an 50 wt% aqueous solution containing an equimolar salt of the pentamethylenediamine produced in Reference Example 4 and azelaic acid (Emerox 1144 produced by Emery Oleochemicals) and 1.58 g (0.0155 mol) of the pentamethylenediamine, and hermetically sealed. The internal atmosphere was replaced by nitrogen. Heating was started, and after the pressure in the vessel reached 17.5 kg/cm², the water was discharged outside the system, while the pressure in the vessel was kept at 17.5 kg/cm² for 1.5 hours. Then, the pressure in the vessel was returned to atmospheric pressure, taking 1 hour, and further at a reduced pressure of -160 mm Hg and at 260°C, a reaction was performed for 1 hour, to complete polymerization. Subsequently, the polymer was discharged from the polymerization vessel as a gut and pelletized, being dried in vacuum at 80°C for 24 hours, to obtain nylon 59 of ηr = 2.64, amino end group concentration = 6.10 x 10⁻⁵ mol/g, carboxyl end group concentration = 6.34 x 10⁻⁵ mol/g and Tm = 214°C.

### Reference Example 9 (Production of nylon 512)

A 3-liter pressure vessel was charged with 1, 500 g (2.26 mol) of an 50 wt% aqueous solution containing an equimolar salt of the pentamethylenediamine produced in Reference Example 4 and dodecanedioic acid (produced by Ube Industries. Ltd.) and 1.38 g (0.0135 mol) of the pentamethylenediamine, and hermetically sealed. The internal atmosphere was replaced by nitrogen. Heating was started, and after the pressure in the vessel reached 17.5 kg/cm², the water was discharged outside the system, while the pressure in the vessel was kept at 17.5 kg/cm² for 1.5 hours. Then, the pressure in the vessel was returned to atmospheric pressure, taking 1 hour, and further at a reduced pressure of -160 mm Hg and at 260°C, a reaction was performed for 1 hour, to complete polymerization. Subsequently, the polymer was discharged from the polymerization vessel as a gut and pelletized, being dried in vacuum at 80°C for 24 hours, to obtain nylon 512 of ηr = 2.49, amino end group concentration = 5.77 x 10⁻⁵ mol/g, carboxyl end group concentration = 7.01 x 10⁻⁵ mol/g and Tm = 211°C.

### Reference Example 10 (Production of nylon 610)

A 3-liter pressure vessel was charged with 1,500 g (2.36 mol) of an 50 wt% aqueous solution containing an equimolar salt of the hexamethylenediamine (produced by Tokyo Chemical Industry Co., Ltd.) and sebacic acid and 1.64 g (0.0141 mol) of the hexamethylenediamine, and hermetically sealed. The internal atmosphere was replaced by nitrogen. Heating was started, and after the pressure in the vessel reached 17.5 kg/cm², the water was discharged outside the system, while the pressure in the vessel was kept at 17.5 kg/cm² for 1.5 hours. Then, the pressure in the vessel was returned to atmospheric pressure, taking 1 hour, and further at a reduced pressure of -160 mm Hg and at 265°C, a reaction was performed for 1 hour, to complete polymerization. Subsequently, the polymer was discharged from the polymerization vessel as a gut and pelletized, being dried in vacuum at 80°C for 24 hours, to obtain nylon 610 of ηr = 2.69, amino end group concentration = 5.77 x 10⁻⁵ mol/g, carboxyl end group concentration = 5.65 x 10⁻⁵ mol/g and Tm = 225°C.

### Reference Example 11 (Production of nylon 510/56 copolymer)

A 3-liter pressure vessel was charged with 1,200 g (1.97 mol) of an 50 wt% aqueous - solution containing an equimolar salt of the pentamethylenediamine produced in Reference Example 4 and sebacic acid, 300 g (0.604 mil) of an 50 wt% aqueous solution containing an equimolar salt of the pentamethylenediamine produced in Reference Example 4 and adipic acid (produced by Tokyo Chemical Industry Co., Ltd.), and 1.57 g (0.0154 mol) of the pentamethylenediamine produced in Reference Example 4, and hermetically sealed. The internal atmosphere was replaced by nitrogen. Heating was started, and after the pressure in the vessel reached 17.5 kg/cm², the water was discharged outside the system, while the pressure in the vessel was kept at 17.5 kg/cm² for 1.5 hours. Then, the pressure in the vessel was returned to atmospheric pressure, taking 1 hour, and further at a reduced pressure of -160 mm Hg and at 255°C, a reaction was performed for 1 hour, to complete polymerization. Subsequently, the polymer was discharged from the polymerization vessel as a gut and pelletized, being dried in vacuum at 80°C for 24 hours, to obtain nylon 510/56 copolymer of ηr = 2.72, amino end group concentration = 5.75 x 10⁻⁵ mol/g, carboxyl end group concentration = 6.05 x 10⁻⁵ mol/g and Tm = 201°C.

### Reference Example 12 (Production of nylon 56)

A 3-liter pressure vessel was charged with 1,500 g (3.02 mol) of an 50 wt% aqueous solution containing an equimolar salt of the pentamethylenediamine produced in Reference Example 4 and adipic acid and 3.09 g (0.0302 mol) of the pentamethylenediamine produced in Reference Example 4, and hermetically sealed. The internal atmosphere was replaced by nitrogen. Heating was started, and after the pressure in the vessel reached 17.5 kg/cm², the water was discharged outside the system, while the pressure in the vessel was kept at 17.5 kg/cm² for 1.5 hours. Then, the pressure in the vessel was returned to atmospheric pressure, taking 1 hour, and further at a reduced pressure of -160 mm Hg and at 285°C, a reaction was performed for 1 hour, to complete polymerization. Subsequently, the polymer was discharged from the polymerization vessel as a gut and pelletized, being dried in vacuum at 80°C for 24 hours, to obtain nylon 56 of ηr = 2.78, amino end group concentration = 5.93 x 10⁻⁵ mol/g, carboxyl end group concentration = 5.78 x 10⁻⁵ mol/g and Tm = 254°C.

### Reference Example 13 (Production of nylon 6)

A pressure vessel was charged with 700 g of ε-caprolactam (produced by Tokyo Chemical Industry Co., Ltd.) and 700 g of ion exchange water, and hermetically sealed. The internal atmosphere was replaced by nitrogen. Heating was started, and after the pressure in the vessel reached 15.0 kg/cm², the water was discharged outside the system, while the pressure in the vessel was kept at 15.0 kg/cm² for 1.5 hours. Then, the pressure in the vessel was returned to atmospheric pressure, taking 1 hour, and while nitrogen gas was made to flow at 0.5 L/min, a reaction was performed at 260°C for 1 hour, to complete polymerization. Subsequently, the polymer was discharged from the polymerization vessel as a gut and pelletized, and the unreactive caprolactam and oligomer were removed in hot water. Then the residue was dried in vacuum at 80°C for 24 hours, to obtain nylon 6 of ηr = 2.73, amino end group concentration = 5.99 x 10⁻⁵ mol/g, carboxyl end group concentration = 6.05 x 10⁻⁵ mol/g and Tm = 222°C.

### Working Examples 1 to 5 and Comparative Example 1

Various specimens were produced by injection molding using the polyamide resins produced in Reference Examples 5 to 9 and 11, and mechanical properties were evaluated. The results are shown in Table 1.

### Working Examples 6 to 11 and 14 and Comparative Examples 2 to 4

Using a twin screw extruder (TEX30 produced by The Japan Steel Works, Ltd.), a polyamide resin was supplied from the main feeder (upstream supply port) and a fibrous filler was supplied from the side feeder (downstream supply port) at the ratio shown in Table 1 or 2, and melt-kneaded. The melt kneading temperature was 250°C (280°C in Working Example 10 and Comparative Example 4), and the rotational speed of the screws was 250 rpm. However, in Comparative Example 5, a polyamide resin and talc were pre-blended and supplied from the main feeder. The extruded gut was pelletized and dried in vacuum at 80°C for 24 hours. Then, various specimens were produced by injection molding, and the mechanical properties were evaluated. Table 2 or 3 shows the results.

The following fillers were used.
Glass fibers: T289 produced by Nippon Electric Glass Co., Ltd.
Carbon fibers: PAN-based carbon fibers TS-12 produced by Toray Industries, Inc.
Talc: LMS300 produced by Fuji Talc Industrial Co., Ltd.

**Table 1**

| | | | Working Example 1 | Working Example 2 | Working Example 3 | Working Example 4 | Working Example 5 | Comparative Example 1 |
|---|---|---|---|---|---|---|---|---|
| Polyamide resin | Nylon 510 | Reference Example 5 | | | | | | 100 |
| | | Reference Example 6 | 100 | | | | | |
| | | Reference Example 7 | | 100 | | | | |
| | Nylon 59 | Reference Example 8 | | | 100 | | | |
| | Nylon 512 | Reference Example 9 | | | | 100 | | |
| | Nylon 510/56 | Reference Example 11 | | | | | 100 | |
| ηr | | - | 2.72 | 2.76 | 2.64 | 2.49 | 2.72 | 2.03 |
| Melting point of polyamide resin | | °C | 218 | 218 | 214 | 211 | 201 | 197 |
| Amino end group concentration | | ×10⁻⁵mol/g | 5.95 | 6.01 | 6.10 | 5.77 | 5.75 | 9.81 |
| Carboxyl end group concentration | | ×10⁻⁵mol/g | 6.17 | 5.84 | 6.34 | 7.01 | 6.05 | 8.06 |
| Flexural modulus | | GPa | 1.97 | 1.99 | 1.88 | 1.85 | 1.81 | 1.98 |
| Tensile strength | | MPa | 61.0 | 61.3 | 63.7 | 56.8 | 57.7 | 58.0 |
| Water absorption coefficient | | wt% | 3.95 | 3.96 | 4.51 | 2.81 | 4.59 | 4.06 |
| Residence stability | temperature | °C | 248 | 248 | 244 | 241 | 231 | 227 |
| | Y/X | - | 1.17 | 1.15 | 1.13 | 1.09 | 1.07 | 0.92 |
| Molding stability | | - | ○ | ○ | ○ | ○ | ○ | ○ |

**Table 2**

| | | | Working Example 6 | Working Example 7 | Working Example 8 | Working Example 9 | Working Example 10 | Working Example 11 |
|---|---|---|---|---|---|---|---|---|
| Polyamide resin | Nylon 510 | Reference Example 7 | 100 | 100 | | 100 | 80 | 80 |
| | Nylon 510/56 | Reference Example 11 | | | 100 | | | |
| | Nylon 56 | Reference Example 12 | | | | | 20 | |
| | Nylon 6 | Reference Example 13 | | | | | | 20 |
| Filler | Glass fibers | T289 | 8.7 | 43 | 43 | | 43 | 43 |
| | Carbon fibers | TS-12 | | | | 43 | | |
| ηr | | - | 2.77 | 2.76 | 2.71 | 2.79 | 2.77 | 2.75 |
| Melting point of polyamide resin | | °C | 218 | 218 | 201 | 218 | 218,254 | 218,223 |
| Amino end group concentration | | ×10⁻⁵mol/g | 5.70 | 5.74 | 5.79 | 5.59 | 5.63 | 5.50 |
| Carboxyl end group concentration | | ×10⁻⁵mol/g | 5.61 | 5.83 | 6.11 | 5.78 | 5.84 | 6.07 |
| Flexural modulus | | GPa | 3.58 | 7.59 | 7.43 | 8.15 | 7.72 | 7.66 |
| Tensile strength | | MPa· | 92.1 | 168 | 164 | 182 | 172 | 169 |
| Water absorption coefficient | | wt% | 3.56 | 2.52 | 3.35 | 2.55 | 3.23 | 3.09 |
| LLC resistance | | % | - | 52 | - | - | - | - |
| Residence stability | Residence temperature | °C | 248 | 248 | 231 | 248 | 284 | 253 |
| | Y/X | - | 1.15 | 1.13 | 1.09 | 1.16 | 1.24 | 1.13 |
| Molding stability | | - | ○ | ○ | ○ | ○ | ○ | ○ |

**Table 3**

| | | | Comparative Example 2 | Comparative Example 3 | Comparative Example 4 | Working Example 14 |
|---|---|---|---|---|---|---|
| Polyamide resin | Nylon 510 | Reference Example 5 | 100 | | | |
| | | Reference Example 7 | | | | 100 |
| | Nylon 610 | Reference Example 10 | | 100 | | |
| | Nylon 56 | Reference Example 12 | | | 100 | |
| Filler | Glass fibers | T289 | 43 | 43 | 43 | |
| | Talc | LMS300 | | | | 43 |
| ηr | | - | 2.01 | 2.70 | 2.80 | 2.76 |
| Melting point of polyamide resin | | °C | 197 | 225 | 254 | 218 |
| Amino end group concentration | | ×10⁻⁵ mol/g | 9.80 | 5.69 | 5.62 | 5.72 |
| Carboxyl end group concentration | | ×10⁻⁵mol/g | 8.17 | 5.62 | 5.93 | 5.84 |
| Flexural modulus | | GPa | 6.91 | 7.25 | 8.27 | 5.29 |
| Tensile strength | | MPa | 122 | 156 | 190 | 88.2 |
| Water absorption coefficient | | wt% | 2.93 | 1.96 | 6.71 | 2.56 |
| LLC resistance | | % | - | 59 | 10 | - |
| Residence stability | temperature | °C | 227 | 255 | 284 | 248 |
| | Y/X | - | 0.94 | 1.34 | 1.10 | 1.08 |
| Molding stability | | - | ○ | × | ○ | × |

From the comparison between Working Examples 1, 2 and 7 and Comparative Examples 1 and 2, it can be seen that in the case where the total content of 2,3,4,5-tetrahydropyridine and piperidine contained in pentamethylenediamine is more than 0.10 wt%, the melting point is low while the residence stability is poor.

From Working Examples 5, 8, 10 and 11, it can be seen that also in the case where a comonomer other than pentamethylenediamine or another polyamide is contained by a specific amount, low water absorbability and excellent residence stability can be obtained.

From the comparison between Working Example 7 and Comparative Example 3, it can be seen that in the case where nylon 610 is used as the polyamide resin, the viscosity increase during melting is large, but that in the case where nylon 510 is used, since the viscosity increase is inhibited, a long molded article obtained is excellent in molding stability.

From the comparison between Working Example 7 and Comparative Example 4, it can be seen that in the case where nylon 56 is used as the polyamide resin, the water absorption coefficient is high, making the dimensional stability poor.

From the comparison between working Example 7 and working Example 14, it can be seen that in the case where talc is used as the filler, the effect of enhancing the tensile strength is small compared with the case of using glass fibers as the filler. Further, since the melt viscosity of the composition is too high, a long molded article cannot be obtained.

### Working Example 12 ana Comparative Example 6

A polyamide resin and an impact strength modifier were pre-blended at the ratio shown in Table 4. The blend was supplied into a twin screw extruder (PCM-30 produced by Ikegai Corp.) set at a cylinder temperature of 250°C and at a screw rotational speed of 200 rpm, and melt-kneaded. The extruded gut was pelletized and dried in vacuum at 80°C for 24 hours. Then, various specimens were produced by injection molding, and the mechanical properties were evaluated. The results are shown in Table 4.

As the impact strength modifier, an acid-modified ethylene-butene-1 copolymer (Tafmer MH5020 produced by Mitsui Chemicals, Inc.) was used.

**Table 4**

| | | | Working Example 12 | Comparative Example 6 |
|---|---|---|---|---|
| Polyamide resin | Nylon 510 | Reference Example 7 | 100 | |
| | Nylon 610 | Reference Example 10 | | 100 |
| Impact strength modifier | Acid-modified elastomer | MH5020 | 25 | 25 |
| Flexural modulus | | GPa | 1.37 | 1.43 |
| Tensile strength | | MPa | 43 | 41 |
| Izod impact strength | | J/m | 1200 | 1110 |

### Working Example 13 and Comparative Example 7

A polyamide resin, flame retarder and antioxidant were pre-blended at the ratio shown in Table 5. The blend was supplied into a twin screw extruder (PCM-30 produced by Ikegai Corp.) set at a cylinder temperature of 250°C and a screw rotational speed of 200 rpm, and melt-kneaded. The extruded gut was pelletized and dried in vacuum at 80°C for 24 hours. Then, various specimens were produced by injection molding, and the mechanical properties were evaluated. The results are shown in Table 5.

The following flame retarder and antioxidant were used. Flame retarder: Melamine cyanurate (MC-4000 produced by Nissan Chemical Industries, Ltd.)
Antioxidant:
N,N'-hexamethylenebis(3,5-di-t-butyl-4-hydroxy-hydrocy nnamide) (TTAD produced by Toray Fine Chemicals Co., Ltd.)

**Table 5**

| | | | Working Example 13 | Comparative Example 7 |
|---|---|---|---|---|
| Polyamide resin | Nylon 510 | Reference Example 7 | 100 | |
| | Nylon 610 | Reference Example 10 | | 100 |
| Flame retarder | Melamine cyanurate | MC-4000 | 6 | 6 |
| Antioxidant | TTAD | - | 0.3 | 0.3 |
| Flexural modulus | | GPa | 2.71 | 2.59 |
| Tensile strength | | MPa | 69 | 67 |
| Flame retardancy | | - | V-0 | V-2 |

### INDUSTRIAL APPLICABILITY

Since the polyamide resin in this invention has a feature of being excellent in heat resistance, low water absorbability and melt residence stability, it is useful for electric and electronic apparatus-related parts, automobile- and vehicle-related parts, household and office electric appliance-related parts, computer-related parts, facsimile- and copier-related parts, machine-related parts and other various applications. It can be especially suitably used for long molded articles typified by

## Claims

1. A polyamide resin, whose relative viscosity in 98% sulfuric acid solution with a 0.01 g/ml content and at 25°C is 1.8 to 4.5, obtained by the thermal polycondensation of pentamethylenediamine containing 0.10 wt% or less of 2,3,4,5-tetrahydropyridine and piperidine in total and an aliphatic dicarboxylic acid with 7 or more carbon atoms as main ingredients.

2. A polyamide resin, according to claim 1, wherein if the relative viscosity in sulfuric acid of the polyamide resin before melt residence in nitrogen atmosphere at the melting point +30°C for 1 hour is X and the relative viscosity in sulfuric acid of the polyamide resin after melt residence in nitrogen atmosphere at the melting point + 30°C for 1 hour is Y, then Y/X is 1.00 to 1.30, wherein the relative viscosity in sulfuric acid is measured at 25 °C in 98% sulfuric acid solution with a concentration of the polyamide resin of 0.01 g/ml.

3. A polyamide resin, according to claim 1 or 2, which has a melting point of 200°C or higher.

4. A polyamide resin, according to any one of claims 1 through 3, wherein the aliphatic dicarboxylic acid with 7 or more carbon atoms is at least one selected from azelaic acid, sebacic acid, undecanedioic acid and dodecanedioic acid.

5. A polyamide resin composition obtained by mixing 0.1 to 200 parts by weight of a fibrous filler with 100 parts by weight of the polyamide resin as described in any one of claims 1 through 4.

6. A polyamide resin composition, according to claim 5, wherein the fibrous filler is glass fibers and/or carbon fibers.

7. A polyamide resin composition obtained by mixing 1 to 100 parts by weight of an impact strength modifier with 100 parts by weight of the polyamide resin as described in any one of claims 1 through 4.

8. A polyamide resin composition obtained by mixing 1 to 50 parts by weight of a flame retarder with 100 parts by weight of the polyamide resin as described in any one of claims 1 through 4.

9. A polyamide resin composition obtained by mixing 1 to 40 parts by weight of a polyamide resin other than the main ingredient with 100 parts by weight of the polyamide resin as described in any one of claims 1 through 4.

10. A molded article obtained by injection-molding the polyamide resin as described in any one of claims 1 through 4 or the polyamide resin composition as described in any one of claims 5 through 9.

11. A molded article, according to claim 10, which is long molded article with a length/width ratio of 5 or more and a length of 300 mm or more.

12. A method for producing the polyamide resin as described in any one of claims 1 through 4 by the thermal polycondensation of raw materials including pentamethylenediamine containing 0.10 wt% or less of 2,3,4,5-tetrahydropyridine and piperidine in total and an aliphatic dicarboxylic acid with 7 or more carbon atoms as main ingredients.

## Patentansprüche

1. Polyamidharz, dessen relative Viskosität in einer 98 %igen Schwefelsäurelösung bei einem 0,01 g/ml Gehalt und bei 25 °C 1,8 bis 4,5 beträgt, erhalten durch die thermische Polykondensation von Pentamethylendiamin mit 0,10 Gew.-% oder weniger an 2,3,4,5-Tetrahydropyridin und Piperidin insgesamt und einer aliphatischen Dicarboxylsäure mit 7 oder mehr Kohlenstoffatomen als Hauptinhaltsstoffe.

2. Polyamidharz nach Anspruch 1, wobei, wenn die relative Viskosität des Polyamidharzes in Schwefelsäure vor einem Schmelzverweilen in einer Stickstoffatmosphäre bei einem Schmelzpunkt von +30 °C für eine Stunde X ist und die relative Viskosität des Polyamidharzes in Schwefelsäure nach dem Schmelzverweilen in der Stickstoffatmosphäre bei dem Schmelzpunkt von +30 °C für eine Stunde Y ist, so beträgt Y/X 1,00 bis 1,30, wobei die relative Viskosität in Schwefelsäure bei 25 °C in 98 %iger Schwefelsäurelösung mit einer Konzentration des Polyamidharzes von 0,01 g/ml gemessen wird.

3. Polyamidharz nach Anspruch 1 oder 2, welches einen Schmelzpunkt von 200 °C oder höher aufweist.

4. Polyamidharz nach einem der Ansprüche 1 bis 3, wobei die aliphatische Dicarboxylsäure mit 7 oder mehr Kohlenstoffatomen mindestens eine ausgewählt aus Azelainsäure, Sebacinsäure, Undecandisäure und Dodecandisäure ist.

5. Polyamidharzzusammensetzung erhalten durch Mischen von 0,1 bis 200 Gewichtsteilen eines faserigen Füllmaterials mit 100 Gewichtsteilen des Polyamidharzes, wie in einem der Ansprüche 1 bis 4 beschrieben.

6. Polyamidharzzusammensetzung nach Anspruch 5, wobei das faserige Füllmaterial Glasfasern und/oder Kohlenstofffasern sind.

7. Polyamidharzzusammensetzung erhalten durch Mischen von 1 bis 100 Gewichtsteilen eines Schlagzähigkeitsmodifikators mit 100 Gewichtsteilen des Polyamidharzes, wie in einem der Ansprüche 1 bis 4 beschrieben.

8. Polyamidharzzusammensetzung erhalten durch Mischen von 1 bis 50 Gewichtsteilen eines Flammenverzögerers mit 100 Gewichtsteilen des Polyamidharzes, wie in einem der Ansprüche 1 bis 4 beschrieben.

9. Polyamidharzzusammensetzung erhalten durch Mischen von 1 bis 40 Gewichtsteilen eines Polyamidharzes, das sich von dem Hauptinhaltsstoff mit 100 Gewichtsteilen des Polyamidharzes, wie in einem der Ansprüche 1 bis 4 beschrieben, unterscheidet.

10. Formartikel erhalten durch ein Spritzgießen des Polyamidharzes, wie in einem der Ansprüche 1 bis 4 beschrieben, oder der Polyamidharzzusammensetzung, wie in einem der Ansprüche 5 bis 9 beschrieben.

11. Formartikel nach Anspruch 10, welcher ein langgeformter Artikel mit einem Längen/Breiten-Verhältnis von 5 oder mehr und einer Länge von 300 mm oder mehr ist.

12. Verfahren zum Herstellen des Polyamidharzes, wie in einem der Ansprüche 1 bis 4 beschrieben, durch die thermische Polykondensation eines Rohmaterials mit Pentamethylendiamin mit 0,10 Gew.-% oder weniger an 2,3,4,5-Tetrahydropyridin und Piperidin insgesamt und einer aliphatischen Dicarboxylsäure mit 7 oder mehr Kohlenstoffatomen als Hauptinhaltsstoffe.

## Revendications

1. Résine de polyamide, dont la viscosité relative dans une solution d'acide sulfurique à 98% avec une teneur de 0,01 g/ml et à 25°C est comprise entre 1,8 et 4,5, obtenue par polycondensation thermique de la pentaméthylènediamine contenant 0,10% en poids ou moins de 2,3,4,5-tétrahydropyridine et de pipéridine au total et d'un acide dicarboxylique aliphatique ayant 7 atomes de carbone ou plus en tant que principaux ingrédients.

2. Résine de polyamide selon la revendication 1, dans laquelle si la viscosité relative dans l'acide sulfurique de la résine de polyamide avant séjour à l'état fondu dans une atmosphère d'azote au point de fusion +30°C pendant 1 heure est X et la viscosité relative dans l'acide sulfurique de la résine de polyamide après séjour à l'état fondu dans une atmosphère d'azote au point de fusion +30°C pendant 1 heure est Y, alors Y/X est compris entre 1,00 et 1,30, où la viscosité relative dans l'acide sulfurique est mesurée à 25°C dans une solution d'acide sulfurique à 98% avec une concentration de la résine de polyamide de 0,01 g/ml.

3. Résine de polyamide selon la revendication 1 ou 2, qui a un point de fusion supérieur ou égal à 200°C.

4. Résine de polyamide selon l'une quelconque des revendications 1 à 3, dans laquelle l'acide dicarboxylique aliphatique ayant 7 atomes de carbone ou plus est au moins choisi parmi l'acide azélaïque, l'acide sébacique, l'acide undécanedioïque et l'acide dodécanedioïque.

5. Composition de résine de polyamide obtenue en mélangeant 0,1 à 200 parties en poids d'une charge fibreuse avec 100 parties en poids de la résine de polyamide telle que décrite dans l'une quelconque des revendications 1 à 4.

6. Composition de résine de polyamide selon la revendication 5, dans laquelle la charge fibreuse représente des fibres de verre et/ou des fibres de carbone.

7. Composition de résine de polyamide obtenue en mélangeant 1 à 100 partie(s) en poids d'un modificateur de résistance au choc avec 100 parties en poids de la résine de polyamide telle que décrite dans l'une quelconque des revendications 1 à 4.

8. Composition de résine de polyamide obtenue en mélangeant 1 à 50 partie(s) en poids d'un agent ignifuge avec 100 parties en poids de la résine de polyamide telle que décrite dans l'une quelconque des revendications 1 à 4.

9. Composition de résine de polyamide obtenue en mélangeant 1 à 40 partie(s) en poids d'une résine de polyamide autre que l'ingrédient principal avec 100 parties en poids de la résine de polyamide telle que décrite dans l'une quelconque des revendications 1 à 4.

10. Article moulé obtenu par moulage par injection de la résine de polyamide telle que décrite dans l'une quelconque des revendications 1 à 4 ou de la composition de résine de polyamide telle que décrite dans l'une quelconque des revendications 5 à 9.

11. Article moulé, selon la revendication 10, qui est un article moulé long ayant un rapport longueur/largeur supérieur ou égal à 5 et une longueur supérieure ou égale à 300 mm.

12. Procédé de production de la résine de polyamide telle que décrite dans l'une quelconque des revendications 1 à 4 par polycondensation thermique de matières premières comportant de la pentaméthylènediamine contenant 0,10% en poids ou moins de 2,3,4,5-tétrahydropyridine et de pipéridine au total et un acide dicarboxylique aliphatique ayant 7 atomes de carbone ou plus comme principaux ingrédients.
